# EUROPEAN PATENT APPLICATION

(11) **EP 3 065 030 A1**
(43) Date of publication of application: **07.09.2016**
(21) Application number: 16155420.9
(22) Date of filing: 12.02.2016
(51) Int. Cl.: G06F 3/01, G02B 27/01

(54) **CONTROL SYSTEM AND METHOD FOR VIRTUAL NAVIGATION**

(30) Priority: 26.02.2015 TW 104106213
(71) Applicant: Staging Design Inc., New Taipei City 242 (TW)
(72) Inventor: LEE, Chung-Pin, 242 New Taipei City (TW)
(74) Representative: Viering, Jentschura & Partner mbB Patent- und Rechtsanwälte

(57) **Abstract**

The disclosure is related to a control system for virtual navigation, and a method for the same. The system includes a central control unit (20) used for managing the peripheral devices of the system, and a control device (407) is provided. The central control unit (20) is used to output virtual reality image signals. The system also includes one or more virtual navigation devices (408) which receive the virtual reality image signals from the central control unit (20). In response to control instructions made by the control device (407), or enable signals generated by the virtual navigation device (408), the every virtual navigation device (408) conducts the virtual navigation. In the process of virtual navigation, an augmented reality technology is introduced for the virtual navigation device (408) to operate voice or text description for a navigation space in the virtual navigation device (408). Further, the system renders a feature of switching to a virtual reality mode or an augmented reality mode.

## Description

### BACKGROUND

### 1. Technical Field

The present invention is generally a control system and method for navigation, in particular a system and method of virtual navigation using both virtual reality and augmented reality technology.

### 2. Description of Related Art

When selling goods, articles, or introducing a place, a tour guide is sent to guide the customers or viewers to browse the goods or articles or conduct an introduction in the exhibition. Further, the host may introduce the merchandise using pictures or models. For example, if any customer is interested in learning the condition of a pre-sale house, the customer can understand that through a model or sample picture since the house is not yet built.

Virtual reality technology can be used to reveal the place through virtual images. In the technology, a three-dimensional space can be simulated using computer software that allows people to experience the virtual reality in an immersive environment. When the user moves within a virtual space, the simulated images can be re-built responsive to the movement through complex calculations in real time. The three-dimensional images are therefore updated.

In general, a software tool is provided to conduct a virtual navigation over virtual reality of an environment. The software tool is such as a web browser or a proprietary program executed in a terminal computer. The software tool allows a user to operate browsing the place in virtual reality.

To implement the virtual reality, a head-mounted display device is introduced to allow the user to experience the virtual reality according to the conventional technology. The head-mounted display device has a display. The user can put on the head-mounted display device on his head and see the virtual reality through the display. Then the user can look around the environment virtually just like he is within the environment for real.

### SUMMARY

The disclosure is related to a control system and method for virtual navigation. The control system for virtual navigation supports multiple virtual navigation devices. The control system allows a navigation operator to control the multiple virtual navigation devices to conduct virtual navigation in a virtual space. Further, the control system can anytime switch to an augmented reality mode in accordance with need. Therefor the user can conduct the navigation under both the virtual reality mode and the augmented reality mode.

In one embodiment, the control system includes a central control unit used to process the signals generated by the peripheral devices of the control system. Further, the control system includes a control device that is provided for the navigation operator to control one or more virtual navigation devices for virtual navigation. The virtual navigation device is electrically connected with the central control unit via a signal interface unit. The virtual navigation device receives the signals including both the virtual reality image and the virtual reality image. In response to the control instruction generated by the control device or the enable signals made by the virtual navigation device, the control system conducts the virtual navigation.

The control system includes an image processing unit having a virtual reality module used to store and output the virtual reality image signals. The image processing unit includes an augmented reality module which is used to store and output the augmented reality image signals. The control system may also have a monitoring display used to display the video screen of every virtual navigation device.

In one embodiment of the method for virtual navigation in accordance with the present invention, one or more virtual navigation devices are first activated. Then every virtual navigation device loads virtual reality image signals from a central control unit. The virtual reality image signals can be loaded from a serving system. The virtual navigation device then enters a virtual reality mode, and the virtual reality images are displayed according to the device's individual location and orientation. The virtual navigation device operates the virtual navigation in response to the control instruction generated by the central control unit through the control device, or the enable signals generated by every virtual navigation device. The central control unit is able to configure the movement or navigation instructions of one or more virtual navigation devices. The navigation instructions include speech or text description of a navigation space. Further, the virtual navigation device loads the augmented reality image signals from the central control unit and converts the signals to the augmented reality images.

In order to further understand the techniques, means and effects of the present disclosure, the following detailed descriptions and appended drawings are hereby referred to, such that, and through which, the purposes, features and aspects of the present disclosure can be thoroughly and concretely appreciated; however, the appended drawings are merely provided for reference and illustration, without any intention to be used for limiting the present disclosure.

### BRIEF DESCRIPTION OF THE DRAWINGS

Fig. 1 shows a circumstance figure describing the control system for virtual navigation in accordance with the present invention;
Fig. 2 shows a schematic diagram depicting the control system for virtual navigation in one embodiment of the present invention;
Fig. 3 shows another schematic diagram depicting the control system for virtual navigation in another embodiment of the present invention;
Fig. 4 shows a circuit block diagram describing the control system according to one embodiment of the present invention;
Fig. 5 shows a circuit block diagram describing the control system according to another embodiment of the present invention;
Fig. 6 shows a flow chart describing the control method for virtual navigation in one embodiment of the present invention;
Fig. 7 shows a flow chart describing the control method for virtual navigation in one further embodiment of the present invention;
Fig. 8 shows a flow chart describing the control method for virtual navigation in one embodiment of the present invention.

### DESCRIPTION OF THE EXEMPLARY EMBODIMENTS

Reference will now be made in detail to the exemplary embodiments of the present disclosure, examples of which are illustrated in the accompanying drawings. Wherever possible, the same reference numbers are used in the drawings and the description to refer to the same or like parts.

A virtual reality (VR) technology renders a three-dimensional virtual space through simulation of computer software and the virtual reality images can be displayed in a specific wearable carrier. For example, a virtual navigation device is introduced in the disclosure. This navigation device can be a kind of head-mounted display that allows a user to experience navigating in a simulated space. According to one of the embodiments of the present invention, the user of the head-mounted virtual navigation device can navigate in the specific space responsive to a navigation operator's control. Alternatively, the user also can himself move in then virtual space responsive to his own somatosensory information. The simulated images are reconfigured and updated by complex calculation in response to the user's movement.

In an exemplary example in accordance with the present invention, the control system and the related method also adopt an augmented reality (AR) technology. The augmented reality technology renders scenery by adding correlated multimedia content, such as video, audio and/or text, to a real scene or a created world by a real-time calculation according to the user's manipulation. The user's manipulation can be based on the location and orientation of the virtual navigation device. One of the objectives of the augmented reality technology is to apply the objects of the virtual world to a real world in a display for being interacted there-between. The disclosure of the present invention relates to the technology initiating a user interface under a virtual reality mode, and adds the augmented video, audio and/or text to the virtual reality scene shown in the virtual navigation device.

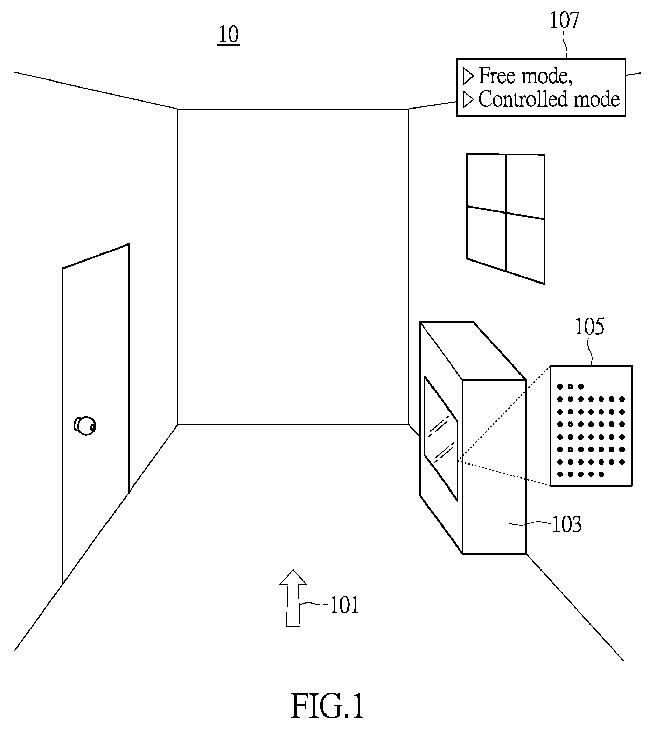

Reference is made to Fig. 1 schematically describing the circumstance of the control system for virtual navigation in one embodiment of the present invention. The figure shows the scene the user sees in the virtual navigation device. The schematic diagram shows a three-dimensional image in a space. In an exemplary example, a navigation operator can guide the consumers to see the scene inside the house; for the pre-sale house, the virtual reality technology reveals the internal reality scene of the pre-sale house for the customers' reference. If the object is an existing house, the virtual reality technology enabled in the system of the present invention reveals the reality scene including the scene outside the house in addition to the real scene around the house without need to arrive at the place. The system in accordance with the present invention is applicable to various applications such as providing virtual reality scenes for the customers to see the houses at many different places.

A navigation place 10 is shown in the diagram. A three-dimensional scene is displayed on a display of the virtual navigation device of the control system. The virtual navigation device is such as a head-mounted display (HMD) that allows the user to browse the space in the virtual reality. According to the present invention, the user can browse the virtual reality scene in response to the navigation operator's instructions. The system also allows the user to directly operate the virtual navigation device to move and to browse the space.

The virtual reality scene for the navigation place 10 shows the current navigation direction 101. The navigation place 10 includes various objects. The user is guided to take one object of interest for advanced information. In an exemplary example, the object of interest is such as the shown navigation object 103, and an appended screen is initiated to show the navigation introduction 105 associated to the navigation object 103. The navigation introduction 105 can be text description or a picture, or even generating a vocal, figure, or video. This appended screen can be a floating window embodied by augmented reality technology shown aside of the virtual reality scene. That means, under a virtual reality mode, the system is able to switch to an augmented reality mode for revealing further information.

It is worth noting that the control system for virtual navigation can operate by two modes including a controlled mode that conducts virtual navigation controlled by the navigation operator; and a free mode allowing the user to operate the virtual navigation. A mode menu 107 in the virtual reality scene is provided for the user to switch the modes. The control-end machine, e.g. the control device, can decide which mode is in operation.

In the technology of the disclosure, the system and method can be operated for the various occasions or places that require navigation. For example, the system and the method for virtual navigation can be, but is not limited to being, provided for consumers to select houses and/or ornaments, for visitors to exhibitions, and for tourists to be given an advance introduction.

Further, the control system for virtual navigation in one aspect of the present invention supports multiple virtual navigation devices to be in operation simultaneously. The navigation operator can control the virtual navigation devices to conduct a virtual navigation in a virtual reality space through a control device. The augmented reality mode can be called anytime in the virtual navigation according to a need. Therefore, the user is able to conduct the navigation across the virtual reality and the augmented reality.

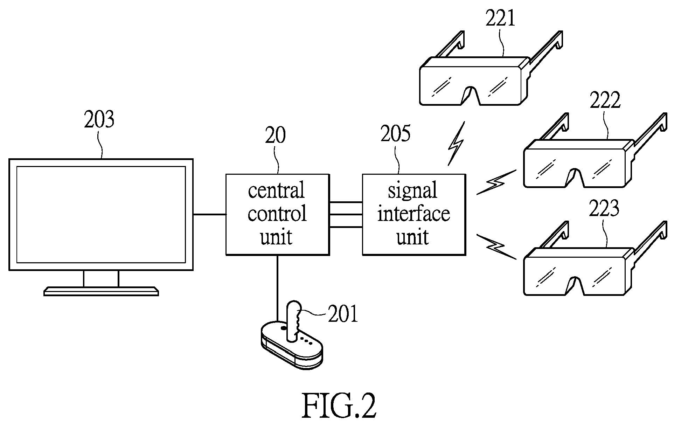

Fig. 2 shows a schematic diagram depicting the control system and its peripheral devices in one embodiment of the present invention.

One of the main components of the control system is a central control unit 20 that is configured to process the signals related to the peripheral devices of the control system for virtual navigation. The central control unit 20 may also be an electronic system in charge of generating image signals. The central control unit 20 has a control device 201. The control system supports one or more virtual navigation devices 221, 222 and 223 that are electrically connected to the central control unit 20 via a signal interface unit 205. The signal interface unit 205 is made by a wired or wireless communication means used to connect with the virtual navigation devices 221, 222, and 223 that are exemplarily the head-mounted displays.

The control device 201 is such as a joystick that can be manipulated by the navigation operator. It is noted that the control device 201 is not limited to any form or control method. The navigation operator utilizes the control device 201 to guide the users, consumers, or visitors to navigate the specific occasion or place in a navigation direction. The control device 201 may also be a touch-controlled device or voice-controlled machine. The control device 201 generates control instructions that are transmitted to the virtual navigation devices 221, 222, and 223. After a processor in each virtual navigation device processes the signals, the virtual reality images in the device can be updated or changed according to the control instructions. In response to the control instructions, an augmented reality image can be produced in the virtual reality scene.

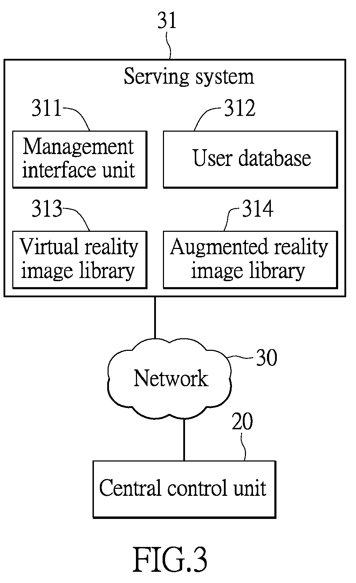

The virtual navigation device 221, 222 or 223 can be an electronic device capable of processing Audio-Video signals. The central control unit 20 first loads the virtual reality image signals. In an exemplary example, the images may be loaded from a serving system, as in the embodiment described in Fig. 3. After the processor of every device processes the image signals, the virtual reality images are displayed in the display of the virtual navigation device. The virtual navigation devices 221, 222, and 223 may conduct the virtual navigation according to the control instructions generated by the control device 201. The system also allows the user himself to manipulate the virtual navigation device freely. In an exemplary embodiment, the sensor disposed in the virtual navigation device generates enable signals responsive to the orientation and/or movement of the user-worn device. The enable signal enables changing the virtual reality images, or generating augmented reality images for virtual navigation.

In the control end, the central control unit 20 initiates functions for monitoring the content displayed in the virtual navigation devices 221, 222, and 223. A monitoring display 203 is exemplarily disposed in the control end, and used to display the screen shots of every virtual navigation device under a controlled mode. Furthermore, in the free mode, the user may himself control the navigation route and direction of the virtual navigation device 221. The monitoring display 203 controlled by the navigation operator can switch the monitored screen shots among the virtual navigation devices 221, 222, and 223, and monitor the screen shots of these devices using split screens.

Reference next is made to Fig. 3 showing the system in accordance with another embodiment of the present invention. The control system for virtual navigation has a serving system 31 connected with the central control unit 20 via network 30. The central control unit 20 is preferably disposed at the control end and used to process the signals made to its peripheral devices for virtual navigation. The peripheral devices may load the augmented reality images and also the virtual reality images from the serving system 31.

On the other hand, the central control unit 20 is linked to the serving system 31 over the network 30. The serving system 31 has a management interface unit 311, a user database 312, a virtual reality image library 313, and an augmented reality image library 314.

The serving system 31 may be an internal system formed of the serving host of an internal network or the server on the Internet. The serving system 31 has a management interface unit 311 that is used to process the instructions transmitted from the central control unit 20 or other electronic devices. The central control unit 20 allows the navigation operator to perform the instructions for virtual navigation, selection signals, or switching display modes. The serving system 31 includes a user database 312 provided for the users to use when the user logs on the system. The navigator operator is required to log on the serving system 31 for ID verification.

The serving system 31 has the virtual reality image library 313 used to store the virtual reality image data, and the augmented reality image library 314 used to store the augmented reality image data. The serving system 31 renders the corresponding image data operative to the control instructions. The image data may be delivered streaming in real time. Alternatively, the image data may be stored in the local storage acting as the local library for the central control unit 20.

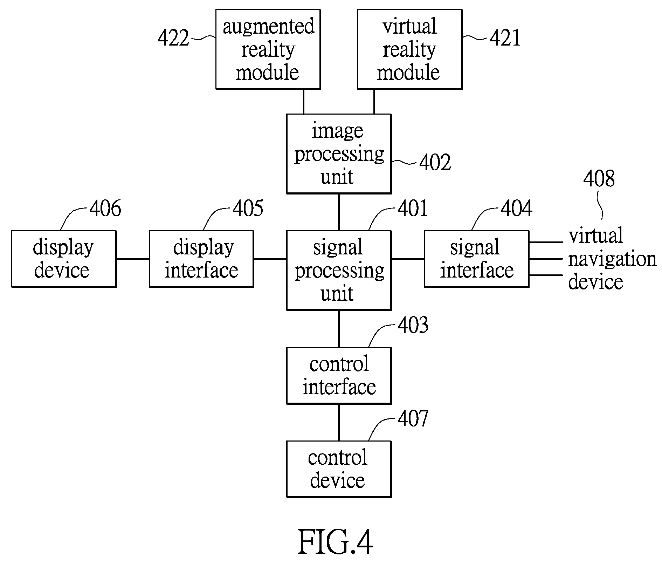

Fig. 4 shows a circuit block diagram having major functional components of the control system according to one embodiment of the present invention.

One of the major circuits of the central control unit (20) is a signal processing unit 401 which is used to process the signals among the peripherals, control signals, or the image signals for virtual reality or augmented reality. The signal processing unit 401 is electrically connected to an image processing unit 402 which is in charge of image storage and processing. The image processing unit 402 outputs virtual reality image signals or augmented reality image signals in response to the control instructions made by the system, or the signals generated by the virtual navigation device 408.

The image processing unit 402 is essentially used to output the virtual reality image signals, and a virtual reality module 421 inside is used to store the virtual reality image signals with respect to various navigation places or scenes. In one embodiment, the image processing unit 402 also outputs the augmented reality image signals, and an augmented reality module 422 inside the unit 402 is used to store the augmented reality image signals for various navigation environments. The augmented reality images include multimedia messages such as voice, text, picture, or video.

The system includes a control interface 403 used for connecting with a control device 407. The control interface 403 is electrically connected with the signal processing unit 401 and used to connect to the control device 407 over a wireless or wired connection. The control instructions made by the control device 407 are transmitted over this control interface 403. The system allows the navigation operator to control the control mode, locations, and orientation of the virtual navigation, and control the virtual navigation device 408 to conduct the virtual navigation. In one embodiment, the navigation operator may also wear a virtual navigation device for displaying the navigation screen shots.

One or more virtual navigation devices (408) can connect to the control system via the signal interface 404. The signal interface 404 may be in compliance with a specific wired or wireless protocol. The diagram shows the virtual navigation device 408 is communicated with the signal processing unit 401. The virtual navigation device 408 receives the virtual reality image signals from the control system. After the internal processing, the virtual reality images are generated. The control device 407 generates the control instructions to drive the virtual navigation device 408 to display the virtual reality images. Also, the virtual navigation device 408 itself is able to generate the enable signals to conduct its own virtual navigation. In one aspect, the virtual navigation device 408 also receives the augmented reality image signals from the image processing unit 402 of the control system for switching to an augmented reality mode. The augmented reality images are then produced from the signals by the virtual navigation device 408.

Furthermore, a display device 406 can be used in the control system for monitoring the screen shot with respect to every controlled virtual navigation device 408. The display device 406 is connected to the signal processing unit 401 via the display interface 405. The display device 406 monitors the activities of the virtual navigation devices (408) through the captured screen shots using single screen, switching screen, or split screen to perform the monitoring.

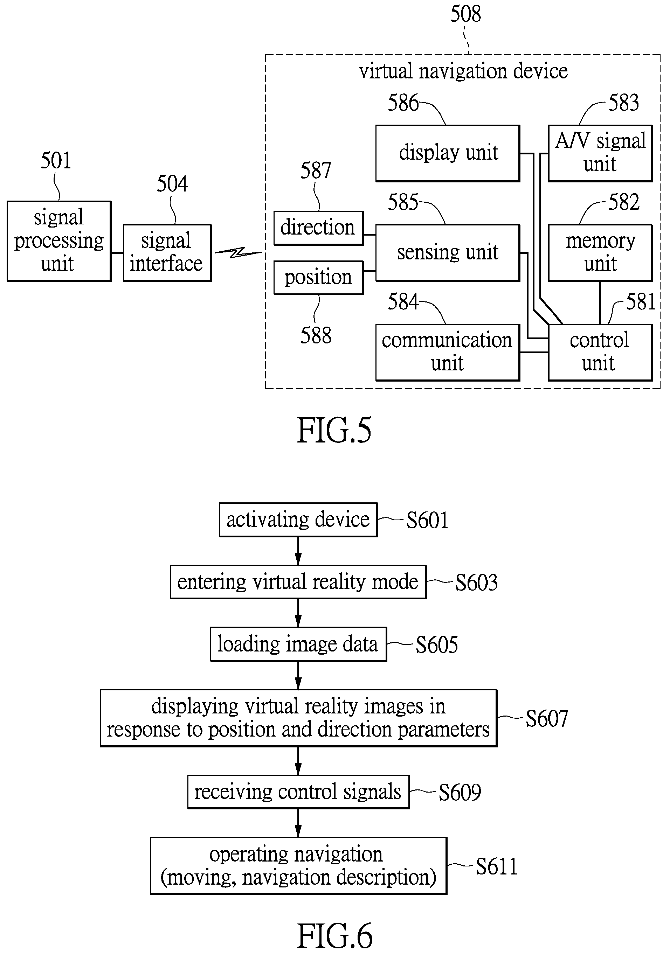

According to one of the embodiments, the user-end virtual navigation device is such as a head-mounted display. Fig. 5 shows a block diagram describing the hardware/circuits or software-implemented modules of the virtual navigation device. In this aspect, the system-end signal processing unit 501 is communicated with the user-end virtual navigation device 508 via a signal interface 504.

In one embodiment of the present invention, the central control system may itself take over the image processing for processing the virtual reality image signals and/or the augmented reality image signals. The central control scheme is applied to a computer system, as shown in Fig. 2 and Fig. 4, exemplarily including the central control unit 20, the signal processing unit 401, and/or the image processing unit 402. The images are then loaded to every virtual navigation device 508. Reference is made to Fig. 3 showing a serving system (31) loading the images to the virtual navigation device 508. Thus, the virtual navigation device 508 acts as a display device.

In one further embodiment, the central control computer system may also simply provide the virtual reality image signals and/or the augmented reality image signals to the user-end virtual navigation device 508. In this aspect, the virtual navigation device 508 is in charge of image processing. After the virtual navigation device 508 receives the image signals from the central control computer system, the internal processor of the virtual navigation device 508 processes those image signals and generates the virtual reality images and/or the augmented reality images.

The virtual navigation device 508 is an electronic device in which the major circuits are such as a control unit 581 used to process the internal signals of the electronic device, and some circuit units electrically connected to the control unit 581. A memory unit 582 is included in the device and is used to store the virtual reality image signals and/or the augmented reality image signals. An A/V signal unit 583 is provided in the device and used to process the virtual reality image signals and/or the augmented reality image signals. A communication unit 584 is included in the device, and is used to process the signals sent by the wired or wireless communications.

The virtual navigation device 508 may include a sensing unit 585 in one aspect of the invention. The sensing unit 585 is used to sense the direction/orientation (587) and position (588) when the wearer operates the virtual navigation device 508. Accordingly, the enable signals are generated for the system to determine the activities of the device 508. The sensing unit 585 is such as an accelerator for detecting the device's movement, a gyroscope for determining the device's orientation, e.g. the direction of seeing, and its position, or an action sensor for performing the navigation actions. The action sensor may render an event of showing a menu option or a mode option in the virtual reality scene according to the wearer's action.

The virtual navigation device 508 includes a display unit 586, such as a display panel, used to display the virtual reality images and/or the augmented reality images.

Reference is made to Fig. 6 showing a flow chart depicting the control process of the control system in accordance with the present invention. In the beginning, such as in step S601, activating the whole system including every connected virtual navigation device. A virtual reality mode is first initiated, such as in step S603, the images of a target navigation scene are loaded from a central control unit of the control system. The images associated with the virtual reality and/or the augmented reality scenes may also be loaded from a serving system, as shown in step S605. In the meantime, such as in step S607, the circuits in the virtual navigation device can accordingly display the virtual reality images in response to the parameters of position and direction/orientation related to the navigating place. Also, the virtual navigation device may itself generate the parameters of position and direction/orientation for performing the virtual navigation.

In the navigation process, such as in step S609, responsive to the instructions made by the navigation operator the virtual navigation device receives the control signals for the virtual navigation. The control instructions are related to controlling a moving route, and showing navigation instructions, as shown in step S611. It is worth noting that the navigation instruction may be voice, pictures, or a text description relating to a navigation space. The virtual navigation device downloads the augmented reality images converted from the image signals from the central control unit. In an exemplary example, a specific window is initiated and displayed over a virtual reality scene by means of augmented reality technology. The generated augmented reality object may be shown near the virtual reality image object.

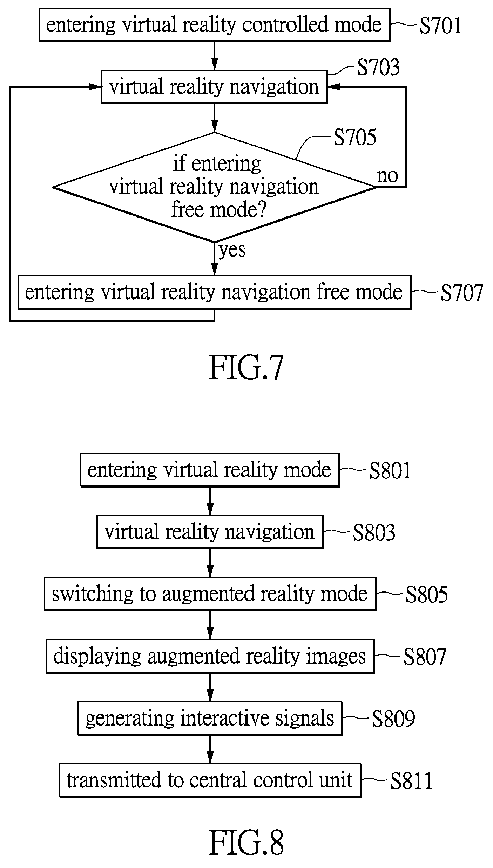

In the flow chart shown in Fig. 7, the method for virtual navigation is described.

To enter a controlled mode of virtual reality, such as in step S701, a virtual navigation is in operation, as shown in step S703. In the process of virtual navigation, a mode menu is created for the user to select a virtual reality controlled mode or a virtual reality free mode. Under the controlled mode, the mode menu allows the user to decide if entering the virtual reality free mode, or not, as shown in step S705.

If the user or the control-end operator does not make any selection, or the selection is made to the virtual reality controlled mode (option "no"), it stays in the present virtual reality controlled mode, as shown in step S703. A virtual navigation is performed under this controlled mode. Through the navigation operator's guidance, the control device generates the control instructions to process the virtual navigation. If the user makes a selection to the free mode, the virtual navigation device enters the virtual reality free mode, as shown in step S707. The system allows the user freely to operate navigation. In response to the enable signals generated by the virtual navigation device manipulated by the user, the free-mode virtual navigation is in operation.

According to one embodiment of the present invention, in a method, an augmented reality mode is incorporated in addition to rendering the navigation mode using the virtual reality images. Fig. 8 shows the flow chart describing the method as follows.

In the beginning of the process, such as in step S801, a virtual reality mode is first initiated. A virtual navigation is in operation, such as in step S803.

In the operation of the virtual navigation, the navigation operator or the wearer may make a decision whether or not to receive specific navigation information. The navigation device may be switched to an augmented reality mode according to the control instruction generated by the control device, or the enable signals made by the virtual navigation device, as shown in step S805. The virtual navigation device may initiate an interactive augmented reality screen in the navigation device. In an exemplary example, a floating window is shown as the interactive screen. For example, the interactive augmented reality icon is shown aside a virtual reality image object.

The instructions relating to the system-end control instructions or the enable signals generated by the virtual navigation device may produce the text description or video message exemplarily shown in the circumstance as shown in Fig. 1. Furthermore, the instructions may also be revealed as voice instructions, as shown in step S807.

Under this augmented reality mode, the control system tracks the position and direction of the virtual navigation device worn by the user. The augmented reality message can be stacked on the screen accurately at the specified position. For example, if the user is interested in a specific object, the associated augmented reality message is produced and stacked over the interested object to allow the user to see the message.

After that, as shown in step S809, the user may produce the interactive signals by manipulating the virtual navigation device. The user may click one object for further information, or cancel the screen. The signals are transmitted to the central control unit through a specific communication protocol, such as in step S811.

In summation, the control system and method for performing the virtual navigation renders a virtual navigation service. The system is able to activate one or more virtual navigation devices, and cause every virtual navigation device to enter a virtual reality mode for virtual navigation. The control-end control instructions guide every controlled navigation device toward the navigation direction and position. The system also provides a mechanism to switch to the virtual reality mode or to the augmented reality mode. The system reveals a navigation space using an augmented reality technology. In the navigation space, the voice or text description can be shown and allow the user to experience immersive navigation service.

The above-mentioned descriptions represent merely the exemplary embodiment of the present disclosure, without any intention to limit the scope of the present disclosure thereto. Various equivalent changes, alterations or modifications based on the claims of the present disclosure are all consequently viewed as being embraced by the scope of the present disclosure.

## Claims

1. A control system for virtual navigation, comprising:
a central control unit (20), used to process signals made by its peripheral device of the control system, having a control device (407);
an image processing unit (402), electrically connected with the central control unit (20), used to output virtual reality image signals;
one or more virtual navigation devices (408), electrically connected with the central control unit (20) via a signal interface unit (205), used to receive the virtual reality image signals and display the virtual reality image, and to conduct virtual navigation in response to control instruction generated by the control device (407) or enable signal generated by the one or more virtual navigation devices (408).

2. The system as recited in claim 1, wherein the image processing unit (402) includes a virtual reality module (421) used to store and output the virtual reality image signals, and an augmented reality module (422) used to store and output augmented reality image signals.

3. The system as recited in claim 2, wherein the central control unit (20) connects a monitoring display (203) used to display pictures revealed in the one or more virtual navigation devices (408).

4. The system as recited in claim 2, wherein, in an operation of virtual navigation, the augmented reality images are shown according to the control instruction or the enable signal generated by the one or more virtual navigation devices (408) and displayed in the one or more virtual navigation devices (408).

5. The system as recited in claim 4, wherein the central control unit (20) connects to a monitoring display (203) for displaying the images displayed in the one or more virtual navigation devices (408).

6. The system as recited in claim 1, wherein the every virtual navigation device (508) comprises:
a control unit (581) used to process internal signals of the virtual navigation device;
a memory unit (582), electrically connected to the control unit (581), used to store the virtual reality image signals and/or the augmented reality image signals;
an A/V signal unit (583), electrically connected to the control unit (581), used to process the virtual reality image signals and/or the augmented reality image signals to be displaying images;
a communication unit (584), electrically connected to the control unit (581), used to conduct bidirectional communication;
a sensing unit (585), electrically connected to the control unit (581), used to sense change of direction or location of the virtual navigation device (508) for generating the enable signal; and
a display unit (586), electrically connected to the control unit (581), used to display the virtual reality images and/or the augmented reality images.

7. A control method for virtual navigation, comprising:
activating one or more virtual navigation devices (408), in which a central control unit (20) for every virtual navigation device (408) loads the virtual reality image signals;
one or more virtual navigation devices (408) entering a virtual reality mode, and every virtual navigation device (408) displaying the virtual reality images according to the device's location and direction; and
in response to a control instruction generated by the central control unit (20) through a control device (407), or an enable signal generated by every virtual navigation device (408), conducting virtual navigation.

8. The method as recited in claim 7, wherein, after activating the one or more virtual navigation devices (408), a mode menu is created to provide a selection of a virtual reality controlled mode or a virtual reality free mode; wherein the virtual reality controlled mode conducts virtual navigation according to the control instruction generated by the control device (407), and the virtual reality free mode conducts virtual navigation according to the enable signal generated by the virtual navigation device (408).

9. The method as recited in claim 7, wherein the central control unit (20) connects to a control device (407) which is used to render operations of a moving route and navigation instruction of the one or more virtual navigation devices (408).

10. The method as recited in claim 9, wherein, after activating the one or more virtual navigation devices (408), a mode menu is created to provide a selection of a virtual reality controlled mode or a virtual reality free mode; wherein the virtual reality controlled mode conducts virtual navigation according to the control instruction generated by the control device (407), and the virtual reality free mode conducts virtual navigation according to the enable signal generated by the virtual navigation device (408).

11. The method as recited in claim 9, wherein the navigation instruction includes a voice or text description related to a navigation space; and the virtual navigation device (408) loads augmented reality images converted from augmented reality image signals from the central control unit or a serving system (31).

12. The method as recited in claim 11, wherein, after activating the one or more virtual navigation devices (408), a mode menu is created to provide a selection of a virtual reality controlled mode or a virtual reality free mode; wherein the virtual reality controlled mode conducts virtual navigation according to the control instruction generated by the control device (407), and the virtual reality free mode conducts virtual navigation according to the enable signal generated by the virtual navigation device (408).

13. The method as recited in claim 7, wherein, in the operation of virtual navigation, every virtual navigation device (408) displays interactive augmented reality images as switching to an augmented reality mode according to the control instruction generated by the control device (407) or the enable signal generated by every virtual navigation device (408).
